# EUROPEAN PATENT SPECIFICATION

(11) **EP 4 063 906 B1**
(45) Date of publication and mention of the grant of the patent: **14.05.2025**
(21) Application number: 21189968.7
(22) Date of filing: 05.08.2021
(51) Int. Cl.: G01S 7/4912, G01S 7/481, G01S 7/484, G01S 7/4911, G01S 17/36, G01S 17/89, G01S 17/08

(54) **DETECTION APPARATUS AND METHOD FOR DETECTING AN OBJECT**
DETEKTIONSVORRICHTUNG UND VERFAHREN ZUR OBJEKTDETEKTION
APPAREIL DE DÉTECTION ET PROCÉDÉ DE DÉTECTION D'UN OBJET

(30) Priority: 25.03.2021 JP 2021051645
(43) Date of publication of application: 28.09.2022
(73) Proprietor: Fujifilm Business Innovation Corp., Tokyo (JP)
(72) Inventor: IGUCHI, Daisuke, Ebina-shi (JP); KONDO, Takashi, Ebina-shi (JP); SAKITA, Tomoaki, Ebina-shi (JP)
(74) Representative: Haseltine Lake Kempner LLP

(56) References cited:
- EP-A1- 3 719 529
- US-B2- 10 775 502

## Description

### BACKGROUND

### TECHNICAL FIELD

The present invention relates to a detection apparatus, a detection program, and an optical device.

### RELATED ART

Patent literature 1 discloses a method for measuring a depth that is insensitive to corrupting light due to internal reflections, the method including: emitting light by a light source onto a scene; performing a corrupting light measurement by controlling a first electric charge accumulation unit of a pixel to collect electric charge based on light hitting the pixel during a first time period where the corrupting light hits the pixel but no return light from an object within a field of view of the pixel hits the pixel; removing a contribution from the corrupting light from one or more measurements influenced by the corrupting light based on the corrupting light measurement; and determining the depth based on the one or more measurements with the contribution from the corrupting light removed.

Patent Literature 2 discloses a distance measurement apparatus including: a light projection unit configured to project light onto a target object; a light-receiving unit configured to receive light reflected or scattered by the target object; a scanning unit configured to scan a scanning region with light projected from the light projection unit; and a distance measurement unit configured to measure a time from light projection by the light projection unit to light reception by the light-receiving unit, and measure a distance to the target object, in which when the scanning region is divided into plural divided regions, and a period from a start of scanning one divided region among all the divided regions to an end of scanning all the divided regions is defined as one scanning, it is determined whether a measurement value of a first divided region can be a measurement result of the first divided region based on the measurement value of the first divided region and a measurement value of a second divided region measured before the measurement value of the first divided region, measured by the distance measurement unit during the one scanning, and when it is determined that the measurement result of the first divided region can be obtained, the measurement value of the first divided region is output as a distance to the target object in the first divided region.

Patent Literature 3 discloses a time-of-flight distance measurement apparatus including: a first light source configured to emit first light to a first light-emitting space; a light-receiving unit including plural pixels and configured to receive light by the pixels; a distance image acquisition unit configured to acquire a distance image indicating a distance from the own apparatus to a target object for each pixel by receiving, by the light-receiving unit, light including first reflected light obtained by reflecting the first light on a front surface of the target object during a light-emitting period during which the first light is repeatedly emitted from the first light source; a luminance value image acquisition unit configured to acquire a luminance value image indicating a luminance value of each pixel by receiving, by the light-receiving unit, light including second reflected light obtained by reflecting, on a front surface of a target object, second light emitted from a second light source to a second light-emitting space including at least a part of the first light-emitting space such that an optical axis of the second light is different from an optical axis of the first light during a non-light-emitting period during which the first light is not repeatedly emitted from the first light source; and a multipath detection unit configured to detect a region where a multipath occurs, by using the distance image and the luminance value image.

Patent Literature 4 discloses a distance measurement apparatus including: a light-emitting unit configured to emit search light; and a light-receiving unit configured to receive reflected light of the search light; in the distance measurement apparatus configured to measure a distance to a target object by reflecting the search light, based on reflected light received by the light-receiving unit, a region centered on the light-emitting unit in which an intensity of scattered light generated when the search light passes through a water droplet having a diameter larger than a wavelength of the search light or is reflected by the water droplet exceeds a noise level of the light-receiving unit is set as a strong scattering region, and the light-receiving unit is installed at a position deviated from the strong scattering region, and a light-blocking unit configured to block, of the scattered light, convergent scattered light that converges in a specific direction and scattered light that is to be incident on the light-receiving unit at an incident angle larger than that of the convergent scattered light is provided.

### CITATION LIST

### PATENT LITERATURE

[Patent Literature 1]: JP-A-2019-219400
[Patent Literature 2]: JP-A-2019-028039
[Patent Literature 3]: JP-A-2017-15448
[Patent Literature 4]: JP-A-2007-333592

EP 3 719 529 A1 discloses a range-finding device and method, where a light-emitting unit has a plurality of light-emitting regions arranged in a two-dimensional array and a light-receiving unit divided into a plurality of light-receiving regions is provided to receive light reflected from a target object. Therein, the output distribution of the light-emitting regions is adjusted such that the intensity of light emission is set to be higher for light-emitting regions that correspond to light-receiving regions that have received lower light levels and that the intensity of light emission is set to be lower for light-emitting regions that correspond to light-receiving regions that have received higher light levels.

### SUMMARY

The scope of the present invention is defined by the appended claims.

### BRIEF DESCRIPTION OF THE DRAWINGS

Exemplary embodiment(s) of the present invention will be described in detail based on the following figures, wherein:
Fig. 1 is a schematic configuration diagram showing a configuration of a measurement apparatus according to a first exemplary embodiment;
Fig. 2 is a block diagram showing a configuration of an electric system of the measurement apparatus;
Fig. 3 is a plan view of a light source;
Fig. 4 is a diagram for illustrating a light-emitting partition;
Fig. 5 is a circuit diagram of the measurement apparatus;
Fig. 6 is a plan view of a 3D sensor;
Fig. 7 is a flowchart showing an example of a flow of a processing of a measurement program according to the first exemplary embodiment;
Fig. 8 is a plan view of the 3D sensor;
Fig. 9 is a diagram for illustrating multipath;
Fig. 10 is a diagram for illustrating the multipath;
Fig. 11 is a flowchart showing an example of a flow of a processing of a measurement program according to a second exemplary embodiment;
Fig. 12 is a flowchart showing an example of a flow of a processing of a measurement program according to a third example not falling within the scope of the claims;
Fig. 13 is a flowchart showing an example of a flow of a processing of a measurement program according to a fourth example not falling within the scope of the claims;
Fig. 14 is a flowchart showing an example of a flow of a processing of a measurement program according to a fifth example not falling within the scope of the claims; and
Fig. 15 is a flowchart showing an example of a flow of a processing of a measurement program according to a sixth example not falling within the scope of the claims.

### DETAILED DESCRIPTION

Hereinafter, an example of an exemplary embodiment according to disclosed technique will be described in detail with reference to the drawings.

### (First Exemplary Embodiment)

As a measurement apparatus that measures a three-dimensional shape of an object to be measured, there is an apparatus that measures a three-dimensional shape based on a so-called time of flight (ToF) method based on a flight time of light. In the ToF method, a time from a timing at which light is emitted from a light source of a measurement apparatus to a timing at which the irradiated light is reflected by the object to be measured and received by a three-dimensional sensor (hereinafter, referred to as 3D sensor) of the measurement apparatus is measured, and a distance to the object to be measured is measured to identify a three-dimensional shape. An object whose three-dimensional shape is to be measured is referred to as the object to be measured. The object to be measured is an example of an object to be detected. Further, measurement of a three-dimensional shape may be referred to as three-dimensional measurement, 3D measurement, or 3D sensing.

The ToF method includes a direct method and a phase difference method (indirect method). The direct method is a method of irradiating the object to be measured with pulsed light that emits light for a very short time, and actually measuring a time until the light returns. The phase difference method is a method of periodically blinking the pulsed light and detecting, as a phase difference, a time delay when plural pulsed lights travel back and forth with respect to the object to be measured. In the present exemplary embodiment, a case where the three-dimensional shape is measured by the phase difference method will be described.

Such a measurement apparatus is mounted on a portable information processing apparatus or the like, and is used for face authentication or the like of a user who intends to access the apparatus. In the related art, in the portable information processing apparatus or the like, a method of authenticating a user by a password, a fingerprint, an iris, or the like has been used. In recent years, there has been a demand for an authentication method with higher security. Therefore, the measurement apparatus that measures the three-dimensional shape has been mounted on the portable information processing apparatus. That is, a three-dimensional image of a face of an accessing user is acquired, whether access is permitted is identified, and only when it is authenticated that the user is permitted to access the apparatus, use of the own apparatus (the portable information processing apparatus) is permitted.

Such a measurement apparatus is also applied to a case where the three-dimensional shape of the object to be measured is continuously measured, such as augmented reality (AR).

A configuration, a function, a method, and the like described in the present exemplary embodiment described below can be applied not only to the face authentication and the augmented reality but also to measurement of a three-dimensional shape of another object to be measured.

### (Measurement Apparatus 1)

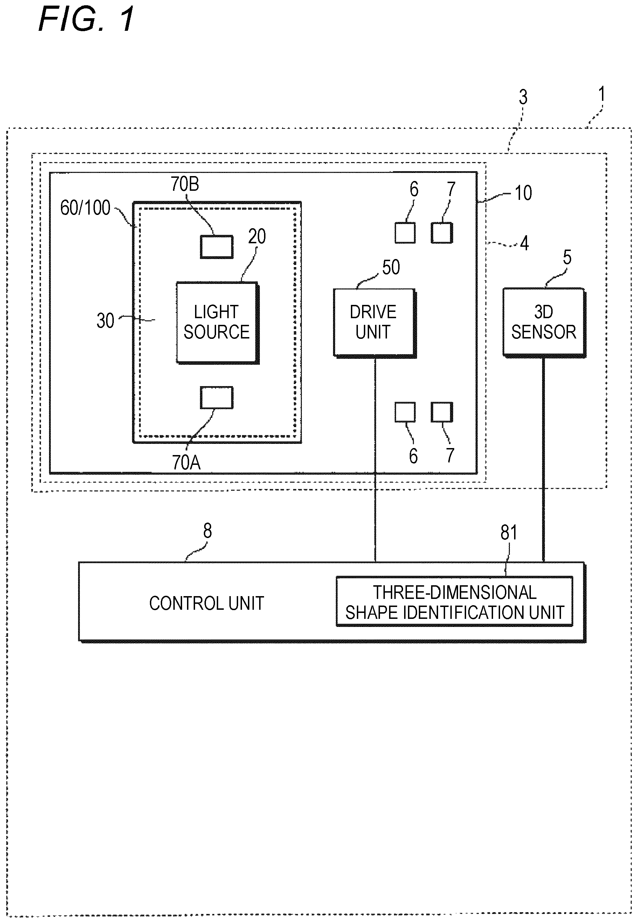

Fig. 1 is a block diagram illustrating an example of a configuration of a measurement apparatus 1 that measures a three-dimensional shape.

The measurement apparatus 1 includes an optical device 3 and a control unit 8. The control unit 8 controls the optical device 3. Then, the control unit 8 includes a three-dimensional shape identification unit 81 that identifies a three-dimensional shape of an object to be measured. The measurement apparatus 1 is an example of a detection apparatus. Further, the control unit 8 is an example of a detection unit.

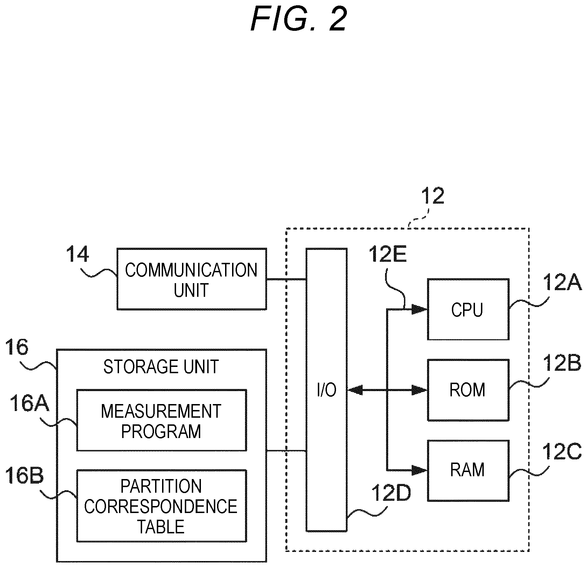

Fig. 2 is a block diagram showing a hardware configuration of the control unit 8. As shown in Fig. 2, the control unit 8 includes a controller 12. The controller 12 includes a central processing unit (CPU) 12A, a read only memory (ROM) 12B, a random access memory (RAM) 12C, and an input/output interface (I/O) 12D. Then, the CPU 12A, the ROM 12B, the RAM 12C, and the I/O 12D are connected to one another via a system bus 12E. The system bus 12E includes a control bus, an address bus, and a data bus.

A communication unit 14 and a storage unit 16 are connected to the I/O 12D.

The communication unit 14 is an interface for performing data communication with an external apparatus.

The storage unit 16 is configured with a non-volatile rewritable memory such as a flash ROM, and stores a measurement program 16A described later, a partition correspondence table 16B described later, and the like. The CPU 12A reads the measurement program 16A stored in the storage unit 16 into the RAM 12C and executes the measurement program 16A, so that the three-dimensional shape identification unit 81 is configured and the three-dimensional shape of the object to be measured is identified. The measurement program 16A is an example of a detection program.

The optical device 3 includes a light-emitting device 4 and a 3D sensor 5. The light-emitting device 4 includes a wiring substrate 10, a heat dissipation base material 100, a light source 20, a light diffusion member 30, a drive unit 50, a holding portion 60, and capacitors 70A and 70B. Further, the light-emitting device 4 may include passive elements such as a resistance element 6 and a capacitor 7 in order to operate the drive unit 50. Here, two resistance elements 6 and two capacitors 7 are provided. Further, although the two capacitors 70A and 70B are shown, one capacitor may be used. When the capacitors 70A and 70B are not distinguished from each other, the capacitors 70A and 70B are referred to as the capacitor 70. Further, the number of each of the resistance element 6 and the capacitor 7 may be one or more. Here, electric components such as the 3D sensor 5, the resistance element 6, and the capacitor 7 other than the light source 20, the drive unit 50, and the capacitor 70 may be referred to as circuit components without being distinguished from each other. The capacitor may be referred to as an electric condenser. The 3D sensor 5 is an example of a light-receiving element array.

The heat dissipation base material 100, the drive unit 50, the resistance element 6, and the capacitor 7 of the light-emitting device 4 are provided on a front surface of the wiring substrate 10. Although the 3D sensor 5 is not provided on the front surface of the wiring substrate 10 in Fig. 1, the 3D sensor 5 may be provided on the front surface of the wiring substrate 10.

The light source 20, the capacitors 70A and 70B, and the holding portion 60 are provided on a front surface of the heat dissipation base material 100. Then, the light diffusion member 30 is provided on the holding portion 60. Here, an outer shape of the heat dissipation base material 100 and an outer shape of the light diffusion member 30 are the same. Here, the front surface refers to a front side of a paper surface of Fig. 1. More specifically, in the wiring substrate 10, a side on which the heat dissipation base material 100 is provided is referred to as a front surface, a front side, or a front surface side. Further, in the heat dissipation base material 100, a side on which the light source 20 is provided is referred to as a front surface, a front side, or a front surface side.

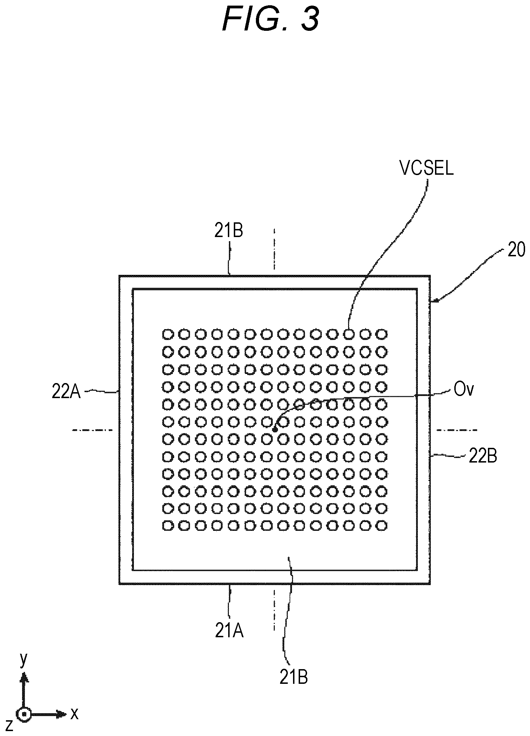

The light source 20 is configured as a light-emitting element array in which plural light-emitting elements are two-dimensionally arranged (see Fig. 3 described later). The light-emitting element is, for example, a vertical cavity surface emitting laser element (VCSEL). Hereinafter, the light-emitting element will be described as the vertical cavity surface emitting laser element VCSEL. Then, hereinafter, the vertical cavity surface emitting laser element VCSEL will be referred to as a VCSEL. Since the light source 20 is provided on the front surface of the heat dissipation base material 100, the light source 20 emits light in a direction perpendicular to the front surface of the heat dissipation base material 100 and away from the heat dissipation base material 100. That is, the light-emitting element array is a surface light-emitting laser element array. The plural light-emitting elements of the light source 20 are two-dimensionally arranged, and a surface of the light source 20 that emits light may be referred to as an emission surface.

The light emitted by the light source 20 is incident on the light diffusion member 30. Then, the light diffusion member 30 diffuses incident light and emits diffused light. The light diffusion member 30 is provided so as to cover the light source 20 and the capacitors 70A and 70B. That is, the light diffusion member 30 is provided by a predetermined distance from the light source 20 and the capacitors 70A and 70B provided on the heat dissipation base material 100, by the holding portion 60 provided on the front surface of the heat dissipation base material 100. Therefore, the light emitted by the light source 20 is diffused by the light diffusion member 30 and radiated to the object to be measured. That is, the light emitted by the light source 20 is diffused by the light diffusion member 30 and radiated to a wider range than in a case where the light diffusion member 30 is not provided.

When three-dimensional measurement is performed by the ToF method, the light source 20 is required to emit, for example, pulsed light (hereinafter, referred to as an emitted light pulse) having a frequency of 100 MHz or more and a rise time of 1 ns or less by the drive unit 50. When the face authentication is taken as an example, a distance of light irradiation is about 10 cm to about 1m. Then, a range of light irradiation is about 1 m square. The distance of light irradiation is referred to as a measurement distance, and the range of light irradiation is referred to as an irradiation range or a measurement range. Further, a surface virtually provided in the irradiation range or the measurement range is referred to as an irradiation surface. The measurement distance to the object to be measured and the irradiation range with respect to the object to be measured may be other than those described above, for example, in a case other than the face authentication.

The 3D sensor 5 includes plural light-receiving elements, for example, 640 × 480 light-receiving elements, and outputs a signal corresponding to a time from a timing at which light is emitted from the light source 20 to a timing at which light is received by the 3D sensor 5.

For example, the light-receiving elements of the 3D sensor 5 receive pulsed reflected light (hereinafter, referred to as received light pulse) from the object to be measured with respect to the emitted light pulse from the light source 20, and accumulate an electric charge corresponding to a time until light is received by the light-receiving elements. The 3D sensor 5 is configured as a device having a CMOS structure in which each light-receiving element includes two gates and electric charge accumulation units corresponding to the gates. Then, by alternately applying pulses to the two gates, generated photoelectrons are transferred to one of the two electric charge accumulation units at high speed. Electric charges corresponding to a phase difference between the emitted light pulse and the received light pulse are accumulated in the two electric charge accumulation units. Then, the 3D sensor 5 outputs, as a signal, a digital value corresponding to the phase difference between the emitted light pulse and the received light pulse for each light-receiving element via an AD converter. That is, the 3D sensor 5 outputs a signal corresponding to the time from the timing at which the light is emitted from the light source 20 to the timing at which the light is received by the 3D sensor 5. That is, a signal corresponding to the three-dimensional shape of the object to be measured is acquired from the 3D sensor 5. The AD converter may be provided in the 3D sensor 5 or may be provided outside the 3D sensor 5.

As described above, the measurement apparatus 1 diffuses the light emitted by the light source 20 to irradiate the object to be measured with the diffused light, and receives the reflected light from the object to be measured by the 3D sensor 5. In this way, the measurement apparatus 1 measures the three-dimensional shape of the object to be measured.

First, the light source 20, the light diffusion member 30, the drive unit 50, and the capacitors 70A and 70B that constitute the light-emitting device 4 will be described.

### (Configuration of Light Source 20)

Fig. 3 is a plan view of the light source 20. The light source 20 is configured by arranging plural VCSELs in a two-dimensional array. That is, the light source 20 is configured as the light-emitting element array including the VCSELs as the light-emitting elements. A right direction of the paper surface is defined as an x direction, and an upper direction of the paper surface is defined as a y direction.

A direction orthogonal to the x direction and the y direction is defined as a z direction. A front surface of the light source 20 refers to a front side of the paper surface, that is, a surface on +z direction side, and a back surface of the light source 20 refers to a back side of the paper surface, that is, a surface on -z direction side. The plan view of the light source 20 is a view of the light source 20 when viewed from the front surface side.

More specifically, in the light source 20, a side on which an epitaxial layer that functions as a light-emitting layer (an active region 206 described later) is formed is referred to as a front surface, a front side, or a front surface side of the light source 20.

The VCSEL is a light-emitting element in which the active region serving as a light-emitting region is provided between a lower multilayer film reflector and an upper multilayer film reflector laminated on a semiconductor substrate 200, and laser light is emitted in a direction perpendicular to a front surface. For this reason, the VCSEL is easily formed into a two-dimensional array as compared with a case where an edge-emitting laser is used. The number of VCSELs provided in the light source 20 is, for example, 100 to 1000. The plural VCSELs are connected to each other in parallel and driven in parallel. The number of VCSELs described above is an example, and may be set in accordance with a measurement distance or an irradiation range.

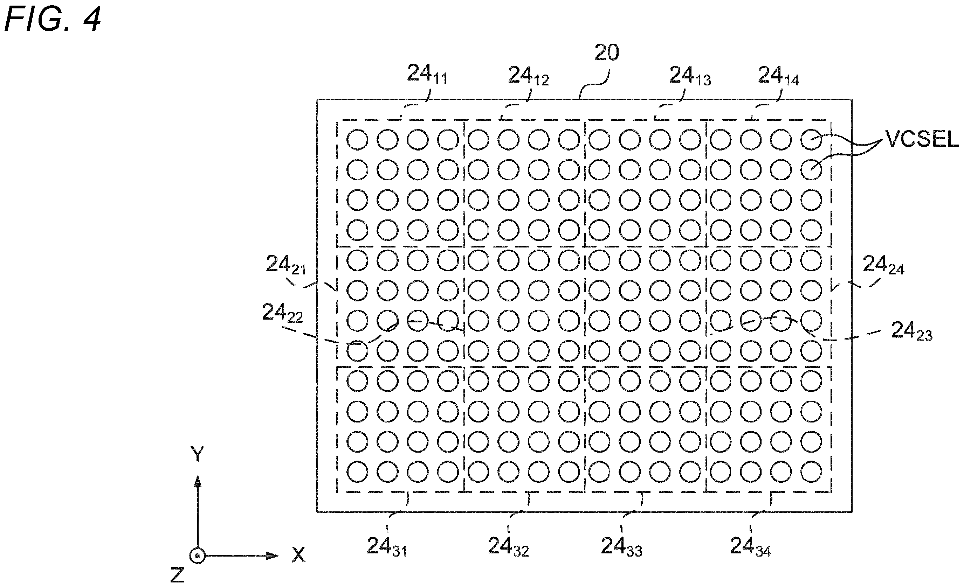

As shown in Fig. 4, the light source 20 is partitioned into plural light-emitting partitions 24, and is driven for each light-emitting partition. In an example of Fig. 4, as indicated by broken lines, the light source 20 is partitioned into 12 (4 × 3) light-emitting partitions 24₁₁ to 24₃₄, but the number of light-emitting partitions is not limited thereto. When the light-emitting partitions are not particularly distinguished, the light-emitting partitions are simply referred to as the light-emitting partitions 24. Further, in the example of Fig. 4, sixteen VCSELs are provided in one light-emitting partition 24, but the number of VCSELs provided in one light-emitting partition 24 is not limited thereto, and one or more VCSELs may be provided.

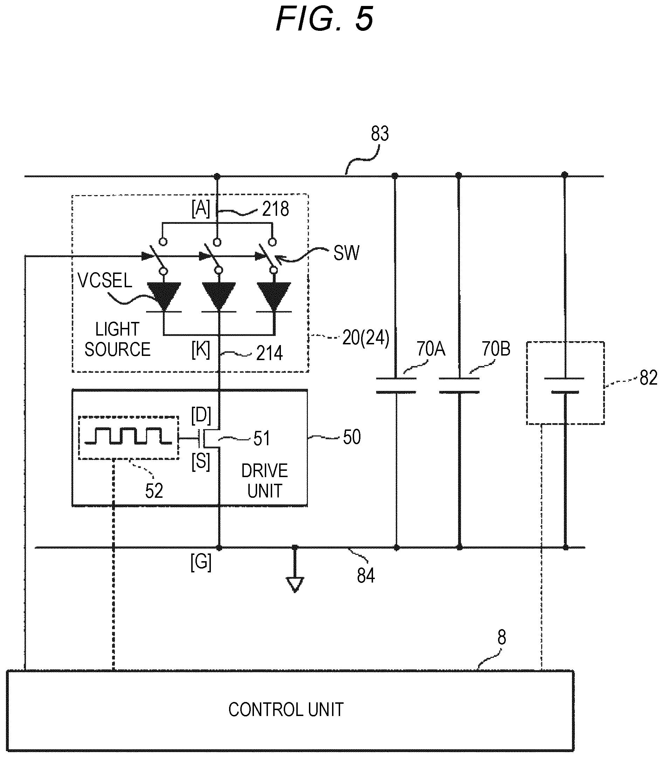

An anode electrode 218 (see Fig. 5) common to the plural VCSELs is provided on the front surface of the light source 20. A cathode electrode 214 (see Fig. 5) is provided on the back surface of the light source 20. That is, the plural VCSELs are connected in parallel. When the plural VCSELs are connected in parallel and driven, light having higher intensity is emitted as compared with a case where the VCSELs are individually driven.

Here, the light source 20 has a rectangular shape when viewed from the front surface side (referred to as planar shape, the same applies hereinafter). Then, a side surface on a -y direction side is referred to as a side surface 21A, a side surface on a +y direction side is referred to as a side surface 21B, a side surface on a -x direction side is referred to as a side surface 22A, and a side surface on a +x direction side is referred to as a side surface 22B. The side surface 21A and the side surface 21B face each other. The side surface 22A and the side surface 22B connect the side surface 21A and the side surface 21B, and face each other.

Then, a center of the planar shape of the light source 20, that is, a center in the x direction and the y direction is defined as a center Ov.

### (Drive unit 50 and Capacitors 70A and 70B)

When it is desired to drive the light source 20 at a higher speed, the light source 20 is preferably driven on a low side. The low-side drive refers to a configuration in which a drive element such as a MOS transistor is positioned on a downstream side of a current path with respect to a drive target such as a VCSEL. Conversely, a configuration in which a drive element is positioned on an upstream side is referred to as high-side drive.

Fig. 5 is a diagram showing an example of an equivalent circuit when the light source 20 is driven by the low-side drive. Fig. 5 shows the VCSEL of the light source 20, the drive unit 50, the capacitors 70A and 70B, and a power supply 82. The power supply 82 is provided in the control unit 8 shown in Fig. 1. The power supply 82 generates a DC voltage having a + side as a power supply potential and a - side as a reference potential. The power supply potential is supplied to a power supply line 83, and the reference potential is supplied to a reference line 84. The reference potential may be a ground potential (sometimes referred to as GND; referred to as [G] in Fig. 5).

As described above, the light source 20 is configured by connecting the plural VCSELs in parallel. The anode electrode 218 of the VCSEL (see Fig. 3, referred to as [A] in Fig. 5) is connected to the power supply line 83.

As described above, the light source 20 is partitioned into the plural light-emitting partitions 24, and the control unit 8 drives the VCSELs for each light-emitting partition 24. In Fig. 5, only three VCSELs are shown in one light-emitting partition 24, and other VCSELs and light-emitting partitions are not shown.

As shown in Fig. 5, a switch element SW is provided between each VCSEL and the power supply line 83. The switch elements SW are simultaneously turned on and off in response to a command from the control unit 8. Accordingly, the VCSELs provided in one light-emitting partition 24 are controlled to emit light and not to emit light at the same timing.

The drive unit 50 includes an n-channel MOS transistor 51 and a signal generation circuit 52 that turns on and off the MOS transistor 51. A drain (referred to as [D] in Fig. 5) of the MOS transistor 51 is connected to the cathode electrode 214 of the VCSEL (see Fig. 3; referred to as [K] in Fig. 5). A source (referred to as [S] in Fig. 5) of the MOS transistor 51 is connected to the reference line 84. Then, a gate of the MOS transistor 51 is connected to the signal generation circuit 52. That is, the VCSELs and the MOS transistor 51 of the drive unit 50 are connected in series between the power supply line 83 and the reference line 84. The signal generation circuit 52 generates an "H level" signal for turning on the MOS transistor 51 and an "L level" signal for turning off the MOS transistor 51 under control of the control unit 8.

One terminal of each of the capacitors 70A and 70B is connected to the power supply line 83, and the other terminal of each of the capacitors 70A and 70B is connected to the reference line 84. Here, when there are plural capacitors 70, the plural capacitors 70 are connected in parallel. That is, in Fig. 5, the capacitor 70 is assumed to be two capacitors 70A and 70B. The capacitor 70 is, for example, an electrolytic condenser or a ceramic condenser.

Next, a method for driving the light source 20 that is low-side driven will be described.

First, the control unit 8 turns on the switch elements SW of the light-emitting partition 24 in which the VCSELs are desired to emit light, and turns off the switch elements SW of the light-emitting partition 24 in which the VCSELs are not desired to emit light.

Hereinafter, driving the VCSELs provided in the light-emitting partition 24 in which the switch elements SW are turned on will be described.

First, a signal generated by the signal generation circuit 52 of the drive unit 50 is at the "L level". In this case, the MOS transistor 51 is in an off state. That is, no current flows between the source ([S] in Fig. 5) and the drain ([D] in Fig. 5) of the MOS transistor 51. Therefore, no current flows through the VCSELs connected in series with the MOS transistor 51. That is, the VCSELs do not emit light.

The capacitors 70A and 70B are connected to the power supply 82, one terminal connected to the power supply line 83 of the capacitors 70A and 70B becomes the power supply potential, and the other terminal connected to the reference line 84 becomes the reference potential. Therefore, the capacitors 70A and 70B are charged by a current flowing from the power supply 82 (by being supplied with electric charges).

Next, when the signal generated by the signal generation circuit 52 of the drive unit 50 reaches the "H level", the MOS transistor 51 shifts from the off state to an on state. Then, a closed loop is formed by the capacitors 70A and 70B and the MOS transistor 51 and the VCSELs connected in series, and electric charges accumulated in the capacitors 70A and 70B are supplied to the MOS transistor 51 and the VCSELs connected in series. That is, a drive current flows through the VCSELs, and the VCSELs emit light. The closed loop is a drive circuit that drives the light source 20.

Then, when the signal generated by the signal generation circuit 52 of the drive unit 50 reaches the "L level" again, the MOS transistor 51 shifts from the on state to the off state. Accordingly, the closed loop (the drive circuit) of the capacitors 70A and 70B and the MOS transistor 51 and the VCSELs connected in series becomes an open loop, and the drive current does not flow through the VCSELs. Accordingly, the VCSELs stop emitting light. The capacitors 70A and 70B are charged by being supplied with electric charges from the power supply 82.

As described above, each time the signal output by the signal generation circuit 52 is shifted between the "H level" and the "L level", the MOS transistor 51 is repeatedly turned on and off, and the VCSELs repeat light emission and non-light emission. Repetition of turning on and off the MOS transistor 51 may be referred to as switching.

Incidentally, when the light emitted from the light source 20 is directly incident on the object to be measured and only the reflected light can be received by the 3D sensor 5, a distance to the object to be measured can be accurately measured.

However, in practice, the 3D sensor 5 includes a lens (not shown), and there is a problem of lens flare that a light-receiving element that should not originally receive unnecessary light multiply reflected by the lens receives the unnecessary light. Hereinafter, light that is directly incident on the object to be measured and reflected is directly received by the light-receiving element, and is referred to as direct light. Further, unnecessary light other than the direct light is referred to as indirect light.

In a light-receiving element that receives not only the direct light but also the indirect light due to the lens flare, a received light amount may exceed an assumed amount and may be saturated. Further, even when an obstacle such as a finger of a user is present between the measurement apparatus 1 and the object to be measured, the received light amount may exceed an assumed amount due to unnecessary indirect light reflected by the obstacle.

Therefore, in the present exemplary embodiment, a distance to the object to be measured is measured by the phase difference method described above based on a received light amount of direct light received by a light-receiving element PD that directly receives light that is directly incident on and reflected by the object to be measured among plural light-receiving elements PD provided in the 3D sensor 5 that receives reflected light of light emitted from the light source 20 to the object to be measured. Specifically, the distance to the object to be measured is measured by causing a VCSEL corresponding to a light-receiving element PD having a received light amount less than a predetermined threshold to emit light. That is, a VCSEL corresponding to a light-receiving element PD having a received light amount equal to or larger than the predetermined threshold does not emit light. A series of processings of measuring the distance to the object to be measured after the light source 20 is caused to emit light may be referred to as integration.

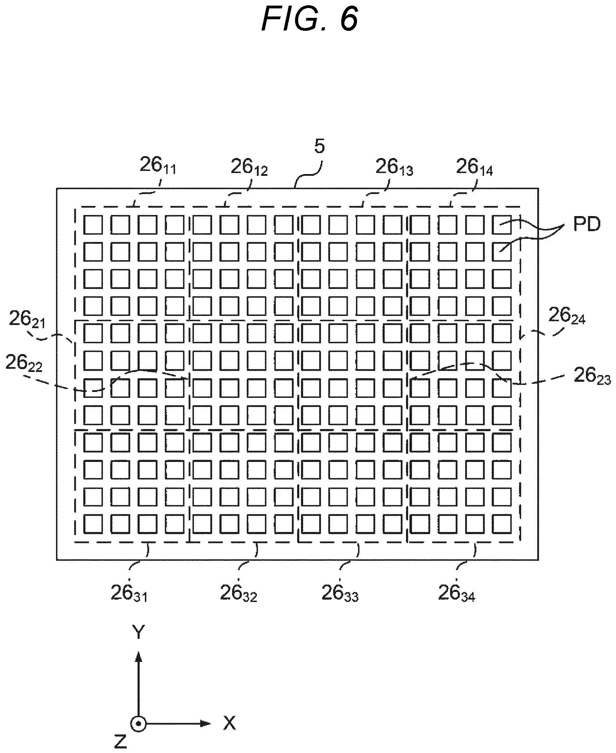

In the present exemplary embodiment, as shown in Fig. 6, the 3D sensor 5 is partitioned into plural light-receiving partitions 26. The light-receiving partition 26 includes one or more light-receiving elements PD. In an example of Fig. 6, sixteen light-receiving elements PD are provided in one light-receiving partition 26, but the number of light-receiving elements PD is not limited thereto. In the example of Fig. 6, for convenience of description, the 3D sensor 5 is partitioned into 4 × 3 light-receiving partitions 26₁₁ to 26₃₄ similar to the light-emitting partitions 24, but may be partitioned into a number different from that of the light-emitting partitions 24. When the light-receiving partitions are not particularly distinguished, the light-receiving partitions are simply referred to as the light-receiving partitions 26.

In the present exemplary embodiment, a light-receiving partition 26 to which the light-receiving elements PD that receive the direct light belong is identified in advance for each light-emitting partition 24 when all VCSELs belonging to the light-emitting partition 24 emit light. A correspondence relationship between the light-emitting partition 24 and the light-receiving partition 26 is stored in advance in the storage unit 16 as the partition correspondence table 16B (see Fig. 2).

The partition correspondence table 16B is obtained based on, for example, a received light amount of light received by each light-receiving partition 26 by individually causing each light-emitting partition 24 to emit light to a predetermined object to be measured in a state where an obstacle or the like is not present.

The light-emitting partitions 24 and the light-receiving partitions 26 may have any one of one-to-one correspondence, many-to-one correspondence, one-to-many correspondence, and many-to-many correspondence, but in the present exemplary embodiment, for convenience of description, the light-emitting partitions 24 and the light-receiving partitions 26 have the one to one correspondence.

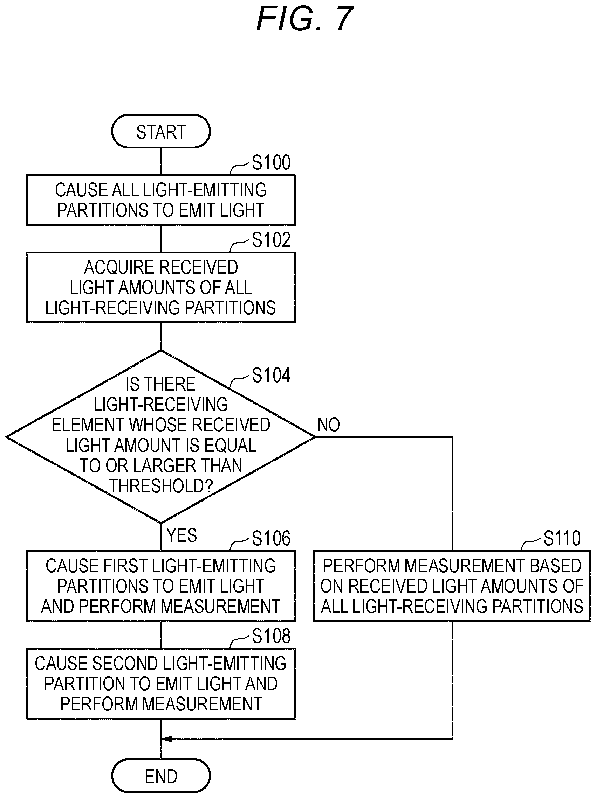

Next, operations of the measurement apparatus 1 according to the present exemplary embodiment will be described. Fig. 7 is a flowchart showing a flow of a measurement processing executed by the control unit 8 of the measurement apparatus 1 according to the present exemplary embodiment. The measurement processing shown in Fig. 7 is executed by the CPU 12A reading the measurement program 16A stored in the storage unit 16.

In step S100, the MOS transistor 51 of the drive unit 50 is turned on and all the switch elements SW are turned on so that the VCSELs of all the light-emitting partitions 24 of the light source 20 emit light. Accordingly, all the VCSELs emit light.

In step S102, a received light amount (an electric charge amount) of light received by the light-receiving elements of all the light-receiving partitions 26 is acquired from the 3D sensor 5.

In step S104, it is determined whether there is a light-receiving element whose received light amount is equal to or larger than a predetermined threshold. The threshold is set to a value at which it can be determined that the indirect light other than the direct light is also received and the received light amount is saturated. For example, the threshold may be set to a maximum value of the light amount received that can be measured by the light-receiving element. Then, when there is the light-receiving element whose received light amount is equal to or larger than a predetermined threshold, the processing shifts to step S106. On the other hand, when there is no light-receiving element whose received light amount is equal to or larger than the predetermined threshold, the processing shifts to step S110.

In step S106, a light-emitting partition 24 corresponding to a light-receiving partition 26 to which the light-receiving element having the received light amount equal to or larger than the threshold belongs is identified with reference to the partition correspondence table 16B. Then, VCSELs belonging to first light-emitting partitions 24 are caused to emit light a predetermined number of times with light-emitting partitions 24 other than the identified light-emitting partition 24 as the first light-emitting partitions 24, received light amounts of light-receiving elements belonging to light-receiving partitions 26 corresponding to the first light-emitting partitions 24 that emit light are acquired from the 3D sensor 5, and a distance to the object to be measured is measured by the phase difference method described above. That is, the VCSELs belonging to the first light-emitting partitions 24 corresponding to the light-receiving partitions 26 to which the light-receiving elements whose received light amounts are less than the threshold belong are caused to emit light, and the distance to the object to be measured is measured. In this way, the VCSELs belonging to the first light-emitting partitions 24 corresponding to the light-receiving partitions 26 less influenced by the indirect light are caused to emit light to measure the distance to the object to be measured. The distance to the object to be measured may be measured by acquiring only the received light amounts of the light-receiving elements belonging to the light-receiving partitions 26 corresponding to the first light-emitting partitions 24.

In step S108, VCSELs belonging to second light-emitting partition 24 other than the first light-emitting partitions 24 are caused to emit light, received light amounts of light-receiving elements belonging to the light-receiving partition 26 corresponding to the second light-emitting partition 24 that emits light are acquired from the 3D sensor 5, and the distance to the object to be measured is measured. At this time, the VCSELs belonging to the second light-emitting partition 24 are caused to emit light at the number of times N2 smaller than the number of times N1 at which the VCSELs of the first light-emitting partitions 24 are caused to emit light at step S106. The number of times N2 is set to the number of times at which a received light amount of light received by the light-receiving elements is less than the threshold. Accordingly, the received light amount of light received by the light-receiving elements is prevented from becoming equal to or larger than the threshold.

In step S110, since there is no light-receiving element whose received light amount is equal to or larger than the threshold, the distance to the object to be measured is measured based on the received light amounts of all the light-receiving elements acquired in step S102.

In this way, in the present exemplary embodiment, the light-emitting partitions corresponding to the light-receiving partitions 26 to which the light-receiving elements whose received light amounts are less than the predetermined threshold belong are set as the first light-emitting partitions 24, and the light-emitting partition corresponding to the light-receiving partition 26 to which the light-receiving elements whose received light amounts are equal to or larger than the predetermined threshold belong is set as the second light-emitting partition 24. Then, the second light-emitting partition 24 is caused to emit light with the number of times of light emission reduced.

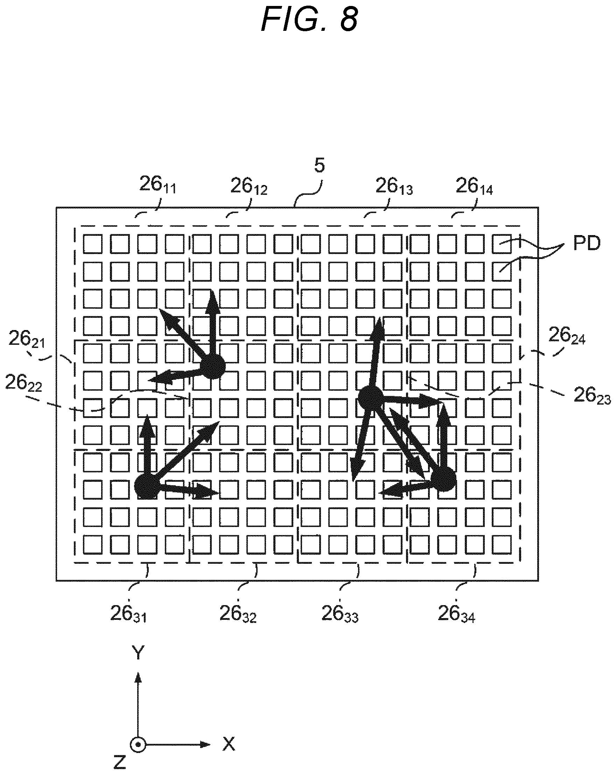

For example, as shown in Fig. 8, received light amounts of at least some of the light-receiving elements belonging to the light-receiving partitions 26₂₂, 26₂₃, 26₃₁, and 26₃₄ are equal to or larger than the threshold. In this case, the light-emitting partitions 24₂₂, 24₂₃, 24₃₁, and 24₃₄ corresponding to the light-receiving partitions 26₂₂, 26₂₃, 26₃₁, and 26₃₄ are set as the second light-emitting partitions 24, and the light-emitting partitions 24 corresponding to other light-receiving partitions 26 are set as the first light-emitting partitions 24.

In the processing of Fig. 7, the processing of step S108 is executed after the processing of step S106 is executed. In an example not falling within the scope of the claims the processing of step S106 and the processing of step S108 may be executed in parallel. That is, light emission of the first light-emitting partitions 24 and light emission of the second light-emitting partition 24 are executed in parallel. Accordingly, a processing time is shortened.

### (Second Exemplary Embodiment)

Next, a second exemplary embodiment will be described. The same parts as those in the first exemplary embodiment are designated by the same reference numerals, and detailed description thereof will be omitted.

Since the configuration of the measurement apparatus 1 is the same as that of the first exemplary embodiment, description thereof will be omitted.

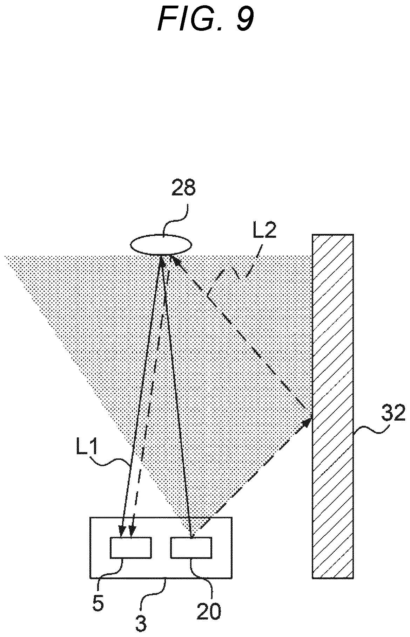

A problem generated when an object to be measured is irradiated with light from the light source 20 and a distance to the object to be measured is measured by receiving reflected light thereof is not only the lens flare described in the first exemplary embodiment. For example, as shown in Fig. 9, light emitted from the light source 20 is not only direct light L1 that is directly incident on and reflected by an object to be measured 28. For example, there is a multipath problem that light is reflected by an obstacle such as a wall 32 and is received by the 3D sensor 5 as multipath light L2 along plural paths.

Due to the multipath, a light-receiving element receives not only direct light but also indirect light that should not be originally received, and thus accuracy of a measured distance may be influenced.

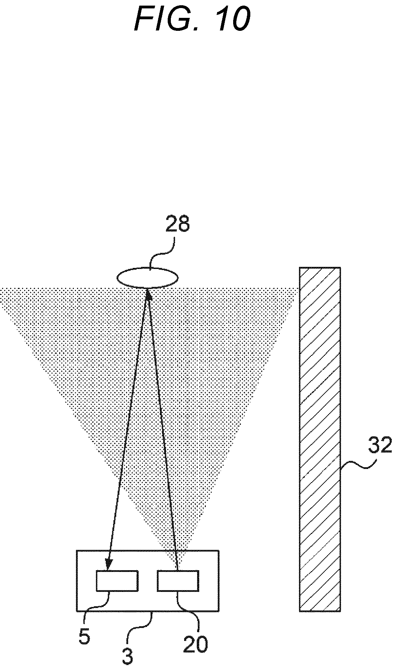

Therefore, in the present exemplary embodiment, a second light-emitting partition 24 corresponding to a light-receiving partition 26 to which the light-receiving element that receives the indirect light that should not be originally received belongs is not caused to emit light, and VCSELs belonging to first light-emitting partitions 24 other than the second light-emitting partition 24 are caused to emit light to measure the distance to the object to be measured. Accordingly, as shown in Fig. 10, the distance to the object to be measured 28 is measured in a state where an influence of the multipath light L2 is prevented.

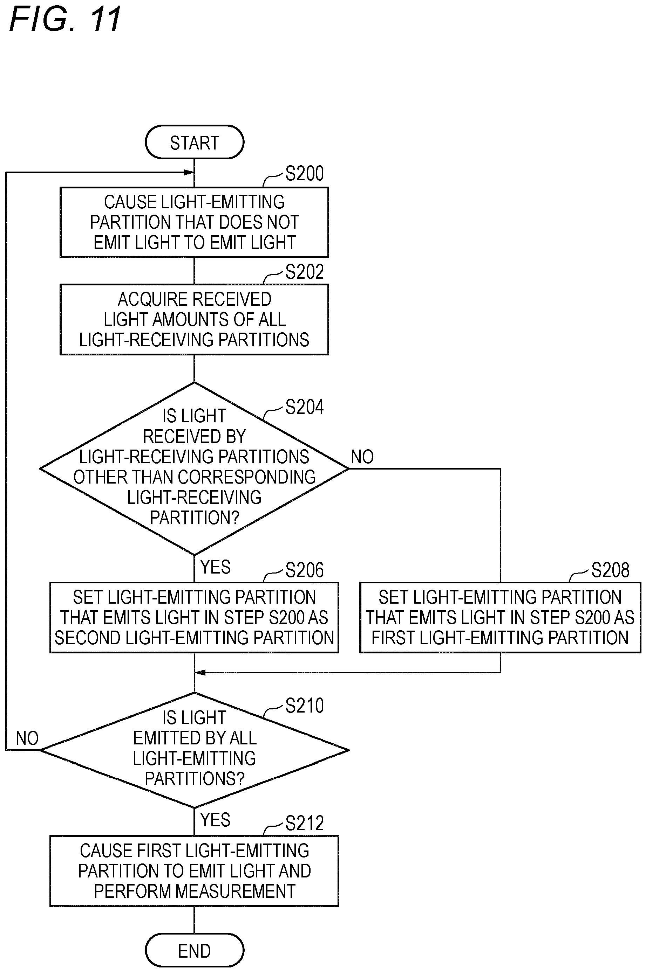

Hereinafter, operations of the present exemplary embodiment will be described. Fig. 11 is a flowchart showing a flow of a measurement processing executed by the control unit 8 of the measurement apparatus 1 according to the present exemplary embodiment.

In step S200, one light-emitting partition 24 that does not emit light is caused to emit light. That is, the MOS transistor 51 of the drive unit 50 is turned on and switch elements SW of one light-emitting partition 24 that does not emit light are turned on so that VCSELs of one light-emitting partition 24 that does not emit light emit light. Accordingly, the VCSELs of one light-emitting partition 24 emit light, and VCSELs of other light-emitting partitions 24 do not emit light.

In step S202, received light amounts of light-receiving elements belonging to all the light-receiving partitions 26 are acquired from the 3D sensor 5.

In step S204, a first light-receiving partition 26 corresponding to the light-emitting partition 24 that emits light in step S200 is identified with reference to the partition correspondence table 16B. Then, based on the received light amounts of the light-receiving elements belonging to all the light-receiving partitions 26 acquired in step S202, it is determined whether light is received by second light-receiving partitions 26 other than the first light-receiving partition 26.

Then, when the light is received by the second light-receiving partitions 26, the processing shifts to step S206, and when the light is not received by the second light-receiving partitions 26, the processing shifts to step S208.

In step S206, the light-emitting partition 24 that emits light in step S200 is set as the second light-emitting partition 24.

On the other hand, in step S208, the light-emitting partition 24 that emits light in step S200 is set as the first light-emitting partition 24.

In step S210, it is determined whether light is emitted by all the light-emitting partitions 24, and when the light is emitted by all the light-emitting partitions 24, the processing shifts to step S212. On the other hand, when there is the light-emitting partition 24 that does not emit light, the processing shifts to step S200, the light-emitting partition 24 that does not emit light is caused to emit light, and the same processing as described above is performed.

In step S212, only the first light-emitting partition 24 set in step S208 is caused to emit light a predetermined number of times, received light amounts of light-receiving elements are acquired from the 3D sensor 5, and the distance to the object to be measured is measured by the phase difference method described above.

In this way, in the present exemplary embodiment, when the light is received by the light-receiving elements belonging to the second light-receiving partitions 26 other than the first light-receiving partition 26 corresponding to the light-emitting partition 24 that emits light, the first light-emitting partition 24 other than the second light-emitting partitions 24 corresponding to the second light-receiving partitions 26 is caused to emit light, and the distance to the object to be measured is measured.

### (Third Example Not Falling Within Scope of the Claims)

Next, a third example not falling within the scope of the claims will be described. The same parts as those in the first exemplary embodiment are designated by the same reference numerals, and detailed description thereof will be omitted.

Since the configuration of the measurement apparatus 1 is the same as that of the first exemplary embodiment, description thereof will be omitted.

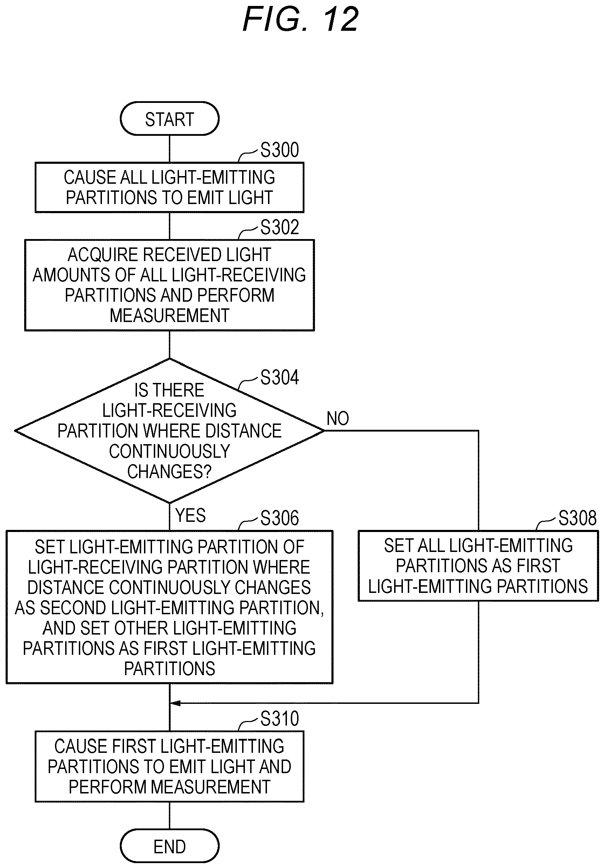

Hereinafter, operations of the present example not falling within the scope of the claims will be described. Fig. 12 is a flowchart showing a flow of a measurement processing executed by the control unit 8 of the measurement apparatus 1 according to the present example not falling within the scope of the claims.

In step S300, as in step S100 of Fig. 7, the MOS transistor 51 of the drive unit 50 is turned on and all the switch elements SW are turned on so that the VCSELs of all the light-emitting partitions 24 of the light source 20 emit light. Accordingly, all the VCSELs emit light.

In step S302, as in step S102 of Fig. 7, an received light amount of light (an electric charge amount) received by light-receiving elements of all the light-receiving partitions 26 is acquired from the 3D sensor 5, and a distance to an object to be measured is measured based on the acquired received light amount.

In step S304, it is determined whether there is a light-receiving partition 26 where the distance measured in step S302 continuously changes. Then, when there is the light-receiving partition 26 where the distance continuously changes, the processing shifts to step S306, and when there is no light-receiving partition 26 where the distance continuously changes, the processing shifts to step S308.

In step S306, a light-emitting partition 24 corresponding to the light-receiving partition 26 where the distance continuously changes is set as the second light-emitting partition 24, and other light-emitting partitions are set as the first light-emitting partitions 24.

In step S308, all the light-emitting partitions 24 are set as the first light-emitting partitions 24.

In step S310, a received light amount of light received by light-receiving elements of all the light-receiving partitions 26 by causing the first light-emitting partitions 24 to emit light is acquired from the 3D sensor 5, and the distance to the object to be measured is measured.

Accordingly, since the light-emitting partition 24 that irradiates a wall or the like with light and where the distance continuously changes is not caused to emit light, an influence of multipath is avoided.

### (Fourth Example Not Falling Within Scope of Claims)

Next, a fourth example not falling within the scope of the claims will be described. The same parts as those in the first exemplary embodiment are designated by the same reference numerals, and detailed description thereof will be omitted.

Since the configuration of the measurement apparatus 1 is the same as that of the first exemplary embodiment, description thereof will be omitted.

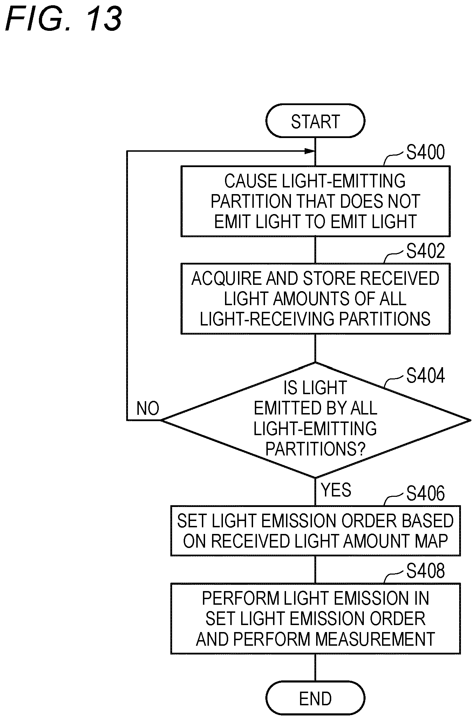

Hereinafter, operations of the present example not falling within the scope of the claims will be described. Fig. 13 is a flowchart showing a flow of a measurement processing executed by the control unit 8 of the measurement apparatus 1 according to the present example not falling within the scope of the claims.

In step S400, as in step S200 of Fig. 11, a light-emitting partition 24 that does not emit light is caused to emit light.

In step S402, as in step S202 of Fig. 11, received light amounts of light-receiving elements belonging to all the light-receiving partitions 26 are acquired from the 3D sensor 5, and the acquired received light amounts are stored in the storage unit 16.

In step S404, it is determined whether light is emitted by all the light-emitting partitions 24, and when the light is emitted by all the light-emitting partitions 24, the processing shifts to step S406. On the other hand, when there is the light-emitting partition 24 that does not emit light, the processing shifts to step S400, the light-emitting partition 24 that does not emit light is caused to emit light, and the same processing as described above is performed. Accordingly, a received light amount map representing a correspondence relationship between the light-emitting partition 24 and received light amounts of the light-receiving partitions 26 when the light-emitting partition 24 is caused to emit light is obtained.

In step S406, a light emission order of the light-emitting partitions 24 is set based on the received light amount map. Specifically, the light emission order is set such that light is emitted by each light-emitting partition 24 where mutual interference of light does not occur. Here, the mutual interference of the light refers to a situation where, when plural light-emitting partitions 24 are caused to emit light simultaneously, the light is also received by the second light-receiving partitions 26 other than the corresponding first light-receiving partition 26, and accuracy of measurement is adversely influenced.

For example, as shown in Fig. 8, the received light amount map is a received light amount map indicating that light is received also by the light-receiving partitions 26₁₁, 26₁₂, and 26₂₂ around the light-receiving partition 26₂₂ when the light-emitting partition 24₂₂ corresponding to the light-receiving partition 26₂₂ is caused to emit light. Further, the received light amount map is a received light amount map indicating that the light is received also by the light-receiving partitions 26₁₃, 26₂₄, and 26₃₃ around the light-receiving partition 26₂₃ when the light-emitting partition 24₂₃ corresponding to the light-receiving partition 26₂₃ is caused to emit light. Further, the received light amount map is a received light amount map indicating that the light is also received by the light-receiving partitions 26₂₁, 26₂₂, and 26₃₂ around the light-receiving partition 26₃₁ when the light-emitting partition 24₃₁ corresponding to the light-receiving partition 26₃₁ is caused to emit light. Further, the received light amount map is a received light amount map indicating that the light is also received by the light-receiving partitions 26₂₃, 26₂₄, and 26₃₃ around the light-receiving partition 26₃₄ when the light-emitting partition 24₃₄ corresponding to the light-receiving partition 26₃₄ is caused to emit light.

In this case, no mutual interference occurs even when the light-emitting partitions 24₁₁, 24₁₂, 24₁₃, 24₁₄, 24₂₁, 24₂₄, 24₃₂, and 24₃₃ corresponding to the light-receiving partitions 26₁₁, 26₁₂, 26₁₃, 26₁₄, 26₂₁, 26₂₄, 26₃₂, and 26₃₃ are caused to emit light simultaneously. Similarly, no mutual interference occurs even when the light-emitting partitions 24₂₂ and 24₂₃ corresponding to the light-receiving partitions 26₂₂ and 26₂₃ are caused to emit light simultaneously. Further, no mutual interference occurs even when the light-emitting partitions 24₃₁ and 24₃₄ corresponding to the light-receiving partitions 26₃₁ and 26₃₄ are caused to emit light simultaneously.

Therefore, in the example of Fig. 8, the light emission order is set such that the light-emitting partitions 24₁₁, 24₁₂, 24₁₃, 24₁₄, 24₂₁, 24₂₄, 24₃₂, and 24₃₃ are caused to emit light simultaneously at a first time, the light-emitting partitions 24₂₂ and 24₂₃ are caused to emit light simultaneously at a second time, and the light-emitting partitions 24₃₁ and 24₃₄ are caused to emit light simultaneously at a third time. The light emission order may be set such that the number of times of light emission is minimized.

In step S408, the light-emitting partitions 24 emit light in the light emission order set in step S406, and the distance to the object to be measured is measured.

In this way, based on the received light amount map, each set of light-emitting partitions 24 having a combination in which the mutual interference of the light does not occur are caused to emit light.

### (Fifth Example Not Falling Within Scope of Claims)

Next, a fifth example not falling within the scope of the claims will be described. The same parts as those in the first exemplary embodiment are designated by the same reference numerals, and detailed description thereof will be omitted.

Since the configuration of the measurement apparatus 1 is the same as that of the first exemplary embodiment, description thereof will be omitted.

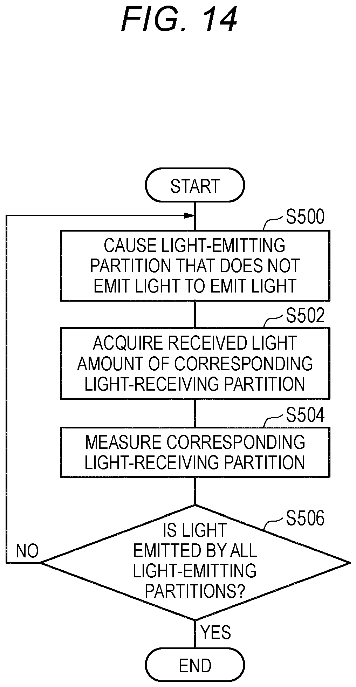

Hereinafter, operations of the present example not falling within the scope of the claims will be described. Fig. 14 is a flowchart showing a flow of a measurement processing executed by the control unit 8 of the measurement apparatus 1 according to the present example not falling within the scope of the claims.

In step S500, as in step S200 of Fig. 11, only one light-emitting partition 24 that does not emit light is caused to emit light a predetermined number of times.

In step S502, a light-receiving partition 26 corresponding to the light-emitting partition 24 that emits light in step S500 is identified with reference to the partition correspondence table 16B, and received light amounts of light-receiving elements belonging to the identified light-receiving partition 26 are acquired from the 3D sensor 5.

In step S504, a distance to an object to be measured in the light-receiving partition 26 corresponding to the light-emitting partition 24 that emits light in step S500 is measured by the phase difference method described above, based on the received light amounts of the light-receiving elements acquired in step S502.

In step S506, it is determined whether light is emitted by all the light-emitting partitions 24, and when the light is emitted by all the light-emitting partitions 24, the present routine ends. On the other hand, when there is the light-emitting partition 24 that does not emit light, the processing shifts to step S500, the light-emitting partition 24 that does not emit light is caused to emit light, and the same processing as described above is performed.

In this way, in the present example not falling within the scope of the claims, the light-emitting partitions 24 are caused to emit light one by one, and the processing of measuring the distance to the object to be measured in the light-receiving partition 26 corresponding to the light-emitting partition 24 that emits light is individually performed.

### (Sixth Example Not Falling Within Scope of Claims)

Next, a sixth example not falling within the scope of the claims will be described. The same parts as those in the first exemplary embodiment are designated by the same reference numerals, and detailed description thereof will be omitted.

Since the configuration of the measurement apparatus 1 is the same as that of the first exemplary embodiment, description thereof will be omitted.

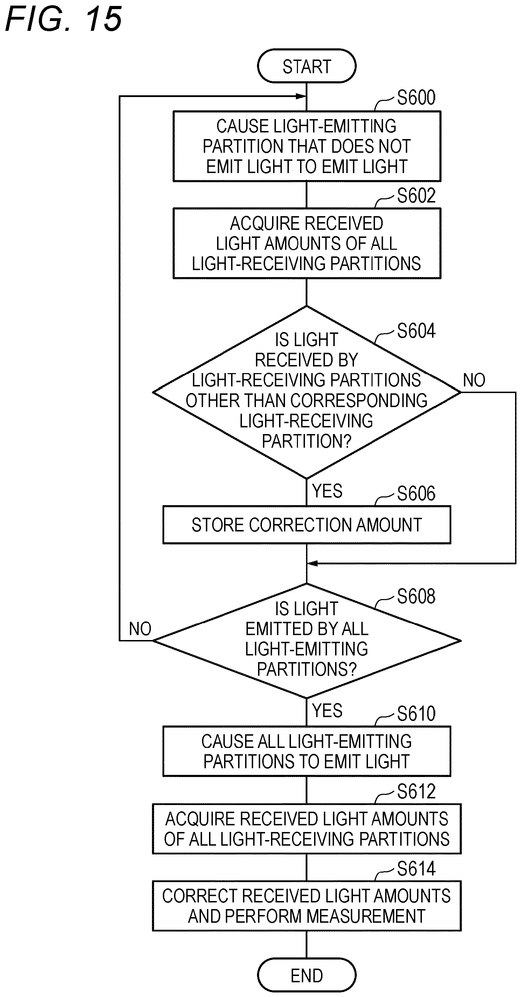

Hereinafter, operations of the present example not falling within the scope of the claims will be described. Fig. 15 is a flowchart showing a flow of a measurement processing executed by the control unit 8 of the measurement apparatus 1 according to the present example not falling within the scope of the claims.

In step S600, as in step S200 of Fig. 11, a light-emitting partition 24 that does not emit light is caused to emit light.

In step S602, as in step S202 of Fig. 11, received light amounts of light-receiving elements belonging to all the light-receiving partitions 26 are acquired from the 3D sensor 5.

In step S604, it is determined whether light is received by the second light-receiving partitions 26 other than the first light-receiving partition 26 corresponding to the first light-emitting partition 24 that emits light in step S600, based on the received light amounts of the light-receiving elements belonging to all the light-receiving partitions 26 acquired in step S602.

Then, when the light is received by the second light-receiving partitions 26, the processing shifts to step S606, and when the light is not received by the second light-receiving partitions 26, the processing shifts to step S608.

In step S606, the received light amount of the light received by light-receiving elements of the second light-receiving partitions 26 is stored in the storage unit 16 as a correction amount.

In step S608, it is determined whether all the light-emitting partitions 24 emit light, and when all the light-emitting partitions 24 emit light, the processing shifts to step S610. On the other hand, when there is the light-emitting partition 24 that does not emit light, the processing shifts to step S600, the light-emitting partition 24 that does not emit light is caused to emit light, and the same processing as described above is performed.

In step S610, VCSELs belonging to all the light-emitting partitions 24 are caused to emit light.

In step S612, received light amounts of light-receiving elements of all the light-receiving partitions 26 are acquired from the 3D sensor 5.

In step S614, the received light amounts are corrected by subtracting the correction amount from the received light amounts for the light-receiving elements for which the correction amount is stored in the storage unit 16 in step S606 among the light-receiving elements of all the light-receiving partitions 26. Then, a distance to an object to be measured is measured using the corrected received light amounts. Accordingly, an influence of indirect light is avoided.

Although the exemplary embodiments have been described above, a technical scope of the present invention is not limited to a scope described in the above exemplary embodiments. Various modifications or improvements can be made to the above-described exemplary embodiments without departing from a gist of the invention, and the modified or improved embodiments are also included in the technical scope of the present invention.

The above-described exemplary embodiments do not limit the invention according to the claims, and all combinations of features described in the exemplary embodiments are not necessarily essential to solutions of the invention. The exemplary embodiments described above include inventions of various stages, and various inventions are extracted by a combination of plural disclosed constituent elements. Even when some constituent elements are deleted from all the constituent elements shown in the exemplary embodiments, a configuration in which some constituent elements are deleted can be extracted as an invention as long as an effect is obtained.

For example, in the above-described exemplary embodiments, a case where the three-dimensional shape of the object to be measured is identified by measuring the distance to the object to be measured has been described, but for example, it may be sufficient to only detect whether the object to be measured exists within a predetermined distance.

The control unit 8 that executes the processings of Figs. 7 and 11 to 15 may be configured with a dedicated processor (for example, a graphics processing unit (GPU), an application specific integrated circuit (ASIC), a field programmable gate array (FPGA), a programmable logic device, or the like) and may be incorporated in the optical device 3. In this case, the distance to the object to be measured is measured by the optical device 3 alone.

In the present exemplary embodiments, a configuration in which the measurement program 16A is installed in the storage unit 16 has been described, but the present invention is not limited thereto. The measurement program 16A according to the present exemplary embodiments may be provided in a form of being recorded in a computer-readable storage medium. For example, the measurement program 16A according to the present exemplary embodiments may be provided in a form in which the measurement program 16A is recorded on an optical disc such as a compact disc (CD) - ROM and a digital versatile disc (DVD) - ROM, or in a form in which the measurement program 16A is recorded on a semiconductor memory such as a universal serial bus (USB) memory and a memory card. Further, the measurement program 16A according to the present exemplary embodiments may be acquired from an external apparatus via a communication line connected to the communication unit 14.

In the above-described exemplary embodiments, the term "processor" refers to hardware in a broad sense. Examples of the processor include general processors (for example, CPU: central processing unit) and dedicated processors (for example, GPU: graphics processing unit, ASIC: application specific integrated circuit, FPGA: field programmable gate array, and programmable logic device).

In the above-described exemplary embodiments, the term "processor" is broad enough to encompass one processor or plural processors in collaboration which are located physically apart from each other but may work cooperatively. An order of operations of the processor is not limited to one described in the above-described exemplary embodiments, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. A detection apparatus (1) comprising:
a light-emitting element array (20) including a plurality of light-emitting partitions (24);
a light-receiving element array (5) including a plurality of light-receiving partitions (26) configured to receive reflected light of light emitted from the light-emitting element array (20) to an object to be detected; and
a control unit (8) configured to selectively drive the plurality of light-emitting partitions (24) and to cause the plurality of light-emitting partitions (24) to emit light and cause each first light-emitting partition (24) of the plurality of light-emitting partitions (24) corresponding to a first light-receiving partition (26) having received light amounts less than a predetermined threshold to emit light by being driven by the control unit (8) to detect the object to be detected in a first detection step (S106),
wherein the control unit (8) detects the object to be detected in the first detection step (S106) based on a received amount of light received by only the light-receiving partitions (26) corresponding to the first light-emitting partitions (24),
wherein the control unit (8) detects the object to be detected in a second detection step (S108) by causing a second light-emitting partition (24) corresponding to a second light-receiving partition (26) having received light amount equal to or larger than the threshold to emit light at a number of times of light emission smaller than a number of times of light emission of the first light-emitting partitions (24), and
wherein the second detection step (S108) is executed after the first detection step (S106).

2. The detection apparatus (1) according to claim 1,
wherein the detection unit (8) detects a distance to the object to be detected by time of flight.

3. A method for detecting an object, the method comprising:
controlling light emission of a plurality of light-emitting partitions (24), provided in a light-emitting element array (20), each light-emitting partition (24) including one or more light-emitting elements;
causing (S200) a single light-emitting partition (24) to emit light,
determining (S204) whether light is received by light-receiving partitions (26) other than the light-receiving partition (26) corresponding to the light-emitting partition (24) that is caused to emit light, setting (S208) the light-emitting partition (24) as a first light-emitting partition (24) when no light is received by light-receiving partitions (26) other than the light-receiving partition (26) corresponding to the light-emitting partition (24) that emits light, and setting (S206) the light-emitting partition (24) as a second light-emitting partition (24) when light is received by light-receiving partitions (26) other than the light-receiving partition (26) corresponding to the light-emitting partition (24) that emits light,
repeating the steps of causing (S200) a single light-emitting partition (24) to emit light, determining (S204) whether light is received by light-receiving partitions (26) other than the light-receiving partition (26) corresponding to the light-emitting partition (24) that is caused to emit light and setting (S208) the light-emitting partition (24) as a first or second light emitting partition (24) for all light-emitting partitions (24),
causing (S212) only the first light emitting partitions (24) to emit light a predetermined number of times; and
detecting (S212) the object to be detected based on a received light amount of light received by a first light-receiving partition (26) corresponding to one of the first light-emitting partitions (24) by a phase difference method.

## Patentansprüche

1. Detektionsvorrichtung (1) umfassend:
eine lichtemittierende Elementanordnung (20), die mehrere lichtemittierende Partitionen (24) enthält;
eine lichtempfangende Elementanordnung (5), die mehrere lichtempfangende Partitionen (26) enthält, die so konfiguriert sind, dass sie reflektiertes Licht von Licht, das von der lichtemittierenden Elementanordnung (20) zu einem zu detektierenden Objekt emittiert wird, empfängt; und
eine Steuereinheit (8), die so konfiguriert ist, dass sie die mehreren lichtemittierenden Partitionen (24) selektiv antreibt und die mehreren lichtemittierenden Partitionen (24) veranlasst, Licht zu emittieren, und jede erste lichtemittierende Partition (24) von den mehreren lichtemittierenden Partitionen (24), die einer ersten lichtempfangenden Partition (26) entspricht, die Lichtmengen von weniger als einem vorbestimmten Schwellenwert empfangen hat, veranlasst, Licht zu emittieren, indem sie von der Steuereinheit (8) angetrieben wird, um das zu detektierende Objekt bei einem ersten Detektionsschritt (S106) zu detektieren,
wobei die Steuereinheit (8) das zu detektierende Objekt bei dem ersten Detektionsschritt (S106) auf der Grundlage einer Menge an empfangenem Licht detektiert, das nur von den lichtempfangenden Partitionen (26) empfangen wird, die den ersten lichtemittierenden Partitionen (24) entsprechen,
wobei die Steuereinheit (8) das zu detektierende Objekt bei einem zweiten Detektionsschritt (S108) detektiert, indem sie eine zweite lichtemittierende Partition (24), die einer zweiten lichtempfangenden Partition (26), die Lichtmenge, die gleich oder größer als der Schwellenwert ist, empfangen hat, entspricht, veranlasst, Licht eine Anzahl an Malen von Lichtemission, die kleiner als eine Anzahl an Malen von Lichtemission der ersten lichtemittierenden Partitionen (24) ist, zu emittieren, und
wobei der zweite Detektionsschritt (S108) nach dem ersten Detektionsschritt (S106) ausgeführt wird.

2. Detektionsvorrichtung (1) nach Anspruch 1,
wobei die Detektionseinheit (8) eine Entfernung zu dem zu detektierenden Objekt durch Flugzeit detektiert.

3. Verfahren zum Detektieren eines Objekts, wobei das Verfahren umfasst:
Steuern der Lichtemission von mehreren lichtemittierenden Partitionen (24), die bei einer lichtemittierenden Elementanordnung (20) vorgesehen sind, wobei jede lichtemittierende Partition (24) ein oder mehrere lichtemittierende Elemente enthält; Veranlassen (S200), dass eine einzelne lichtemittierende Partition (24) Licht emittiert, Bestimmen (S204), ob Licht von lichtempfangenden Partitionen (26) empfangen wird, die von der lichtempfangenden Partition (26) verschieden sind, die der lichtemittierenden Partition (24) entspricht, die veranlasst wird, Licht zu emittieren, Einstellen (S208) der lichtemittierenden Partition (24) als eine erste lichtemittierende Partition (24), wenn kein Licht von lichtempfangenden Partitionen (26) empfangen wird, die von der lichtempfangenden Partition (26) verschieden sind, die der lichtemittierenden Partition (24) entspricht, die Licht emittiert, und Einstellen (S206) der lichtemittierenden Partition (24) als eine zweite lichtemittierende Partition (24), wenn Licht von lichtempfangenden Partitionen (26) empfangen wird, die von der lichtempfangenden Partition (26) verschieden sind, die der lichtemittierenden Partition (24) entspricht, die Licht emittiert,
Wiederholen der Schritte des Veranlassens (S200), dass eine einzelne lichtemittierende Partition (24) Licht emittiert, Bestimmen (S204), ob Licht von lichtempfangenden Partitionen (26) empfangen wird, die von der lichtempfangenden Partition (26) verschieden sind, die der lichtemittierenden Partition (24) entspricht, die veranlasst wird, Licht zu emittieren, und Einstellen (S208) der lichtemittierenden Partition (24) als eine erste oder zweite lichtemittierende Partition (24) für alle lichtemittierenden Partitionen (24),
Veranlassen (S212), dass nur die ersten lichtemittierenden Partitionen (24) eine vorbestimmte Anzahl an Malen Licht emittieren; und
Detektieren (S212) des zu detektierenden Objekts auf der Grundlage einer empfangenen Lichtmenge an Licht, das von einer ersten lichtempfangenden Partition (26), die einer von den ersten lichtemittierenden Partitionen (24) entspricht, durch ein Phasendifferenzverfahren empfangen wird.

## Revendications

1. Appareil de détection (1) comprenant :
une matrice d'éléments émetteurs de lumière (20) incluant une pluralité de partitions émettrices de lumière (24) ;
une matrice d'éléments récepteurs de lumière (5) incluant une pluralité de partitions réceptrices de lumière (26) configurées pour recevoir de lumière réfléchie de lumière émise par la matrice d'éléments émetteurs de lumière (20) vers un objet à détecter ; et
une unité de contrôle (8) configurée pour commander sélectivement la pluralité de partitions émettrices de lumière (24) et pour amener la pluralité de partitions émettrices de lumière (24) à émettre de lumière et pour amener chaque première partition émettrice de lumière (24) de la pluralité de partitions émettrices de lumière (24) correspondant à une première partition réceptrice de lumière (26) ayant reçu des quantités de lumière inférieures à un seuil prédéterminé à émettre de lumière en étant commandée par l'unité de contrôle (8) pour détecter l'objet à détecter dans une première étape de détection (S106),
dans lequel l'unité de contrôle (8) détecte l'objet à détecter dans la première étape de détection (S106) sur la base de une quantité de lumière reçue uniquement par les partitions réceptrices de lumière (26) correspondant aux premières partitions émettrices de lumière (24),
dans lequel l'unité de contrôle (8) détecte l'objet à détecter dans une deuxième étape de détection (S108) en amenant une deuxième partition émettrice de lumière (24) correspondant à une deuxième partition réceptrice de lumière (26) ayant reçu une quantité de lumière égale ou supérieure au seuil à émettre de lumière un nombre de fois inférieur à un nombre de fois d'émission de lumière des premières partitions émettrices de lumière (24), et
dans lequel la deuxième étape de détection (S108) est exécutée après la première étape de détection (S106).

2. Appareil de détection (1) selon la revendication 1,
dans lequel l'unité de détection (8) détecte une distance à l'objet à détecter par temps de vol.

3. Procédé de détection d'un objet, le procédé comprenant :
contrôler émission de lumière d'une pluralité de partitions émettrices de lumière (24), disposées dans un matrice d'éléments émetteurs de lumière (20), chaque partition émettrice de lumière (24) incluant un ou plusieurs éléments émetteurs de lumière ; amener (S200) une seule partition émettrice de lumière (24) à émettre de lumière, déterminer (S204) si lumière est reçue par des partitions réceptrices de lumière (26) autres que la partition réceptrice de lumière (26) correspondant à la partition émettrice de lumière (24) qui est amenée à émettre de lumière, définir (S208) la partition émettrice de lumière (24) comme une première partition émettrice de lumière (24) lorsque aucune lumière n'est reçue par des partitions réceptrices de lumière (26) autres que la partition réceptrice de lumière (26) correspondant à la partition émettrice de lumière (24) qui émet de lumière, et définir (S206) la partition émettrice de lumière (24) comme une deuxième partition émettrice de lumière (24) lorsque lumière est reçue par des partitions réceptrices de lumière (26) autres que la partition réceptrice de lumière (26) correspondant à la partition émettrice de lumière (24) qui émet de lumière,
répéter les étapes consistant à amener (S200) une seule partition émettrice de lumière (24) à émettre de lumière, à déterminer (S204) si lumière est reçue par des partitions réceptrices de lumière (26) autres que la partition réceptrice de lumière (26) correspondant à la partition émettrice de lumière (24) qui est amenée à émettre de lumière et à définir (S208) la partition émettrice de lumière (24) comme une première ou une deuxième partition émettrice de lumière (24) pour toutes les partitions émettrices de lumière (24),
amener (S212) uniquement les premières partitions émettrices de lumière (24) à émettre de lumière un nombre prédéterminé de fois ; et
détecter (S212) l'objet à détecter sur la base d'une quantité de lumière reçue par une première partition réceptrice de lumière (26) correspondant à une des premières partitions émettrices de lumière (24) par un procédé de différence de phase.
